# EUROPÄISCHE PATENTSCHRIFT

(11) **EP 0 517 714 B1**
(45) Veröffentlichungstag und Bekanntmachung des Hinweises auf die Patenterteilung: **24.08.1994**
(21) Anmeldenummer: 91903380.3
(22) Anmeldetag: 16.02.1991
(51) Int. Cl.: F02M 3/07, F02D 9/16, F16K 47/02

(54) **DREHSTELLER**
GOVERNOR
REGULATEUR

(30) Priorität: 08.03.1990 DE 4007260
(43) Veröffentlichungstag der Anmeldung: 16.12.1992
(73) Patentinhaber: ROBERT BOSCH GMBH, 70442 Stuttgart (DE)
(72) Erfinder: KALIPPKE, Harald, D-7141 Benningen (DE); WENDEL, Friedrich, D-7251 Weissach (DE); RENNINGER, Erhard, D-7145 Markgröningen (DE); MEIWES, Johannes, D-7145 Markgröningen (DE); DICK, Dieter, D-7130 Mühlacker 6 (DE)
(86) Internationale Anmeldenummer: DE9100123
(87) Internationale Veröffentlichungsnummer: WO9114090

(56) Entgegenhaltungen:
- WO-A-88/09434
- US-A- 2 449 833
- US-A- 4 962 737

## Beschreibung

### Stand der Technik

Die Erfindung geht aus von einem Drehsteller nach der Gattung des Patentanspruchs 1. Aus der WO 88109434 ist bereits ein solcher Drehsteiler bekannt, bei dem es aber infolge von Wirbelbildungen zu Pfeifgeräuschen kommen kann und dessen Regelverhalten durch Sprünge des an seinem Drehschieber auf tretenden Luftdrehmoments beeinflußt wird.

### Vorteile der Erfindung

Der erfindungsgemäße Drehsteller mit den kennzeichnenden Merkmalen des Patentanspruchs 1 hat demgegenüber den Vorteil, daß beim Durchströmen des Schiebergehäuses störende Geräusche vermieden werden und Luftdrehmomentsprünge nicht mehr auftreten. Außerdem reduzieren sich die Luftdrehmomente selbst auf einen geringen Betrag in der Größenordnung der Lagerreibung.

Durch die in den Patentansprüchen 2ff aufgeführten Maßnahmen sind vorteilhafte Weiterbildungen und Verbesserungen des im Patentanspruch 1 angegebenen Drehstellers möglich. Besonders vorteilhaft ist, daß die als Schrägfenster ausgebildete Drosselöffnung schräg zur Wellenachse verlaufende Begrenzungen aufweist. Die Anordnung sowohl des Ausgangs- als auch des Eingangsstutzens seitlich der Welle des Drehschiebers, insbesondere so, daß die Strömung etwa tangential an der Drehschieberwelle vorbei geleitet wird, vermindert die Ausbildung von Wirbeln im Schiebergehäuse und wirkt damit zusätzlich geräuschmindernd.

### Zeichnung

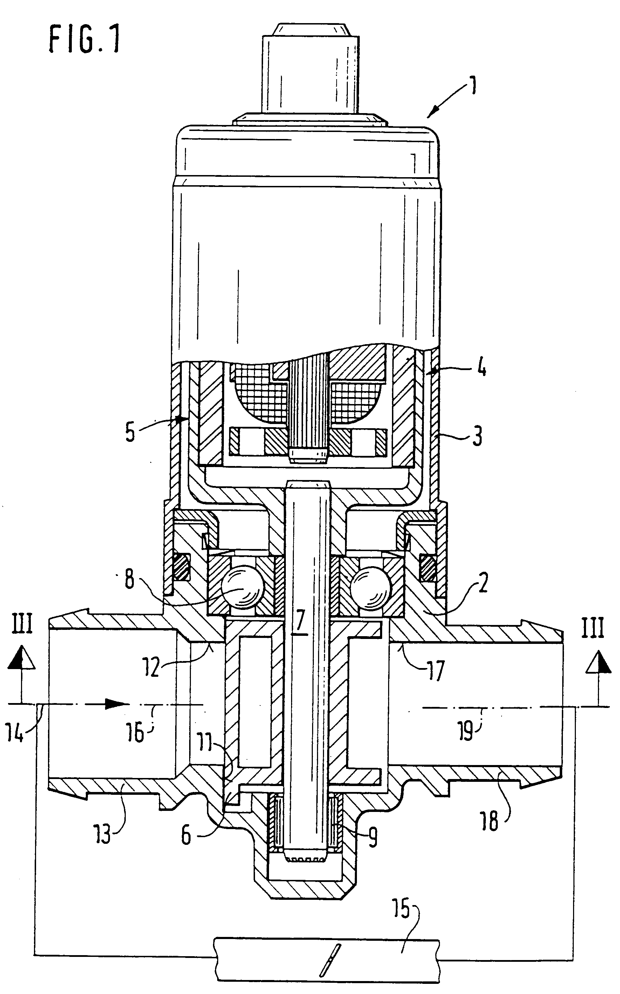

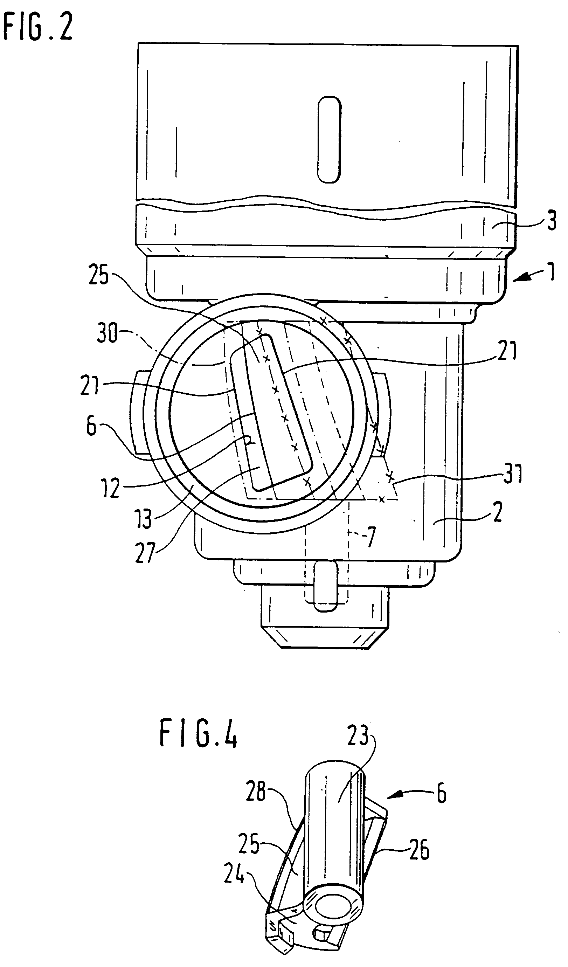

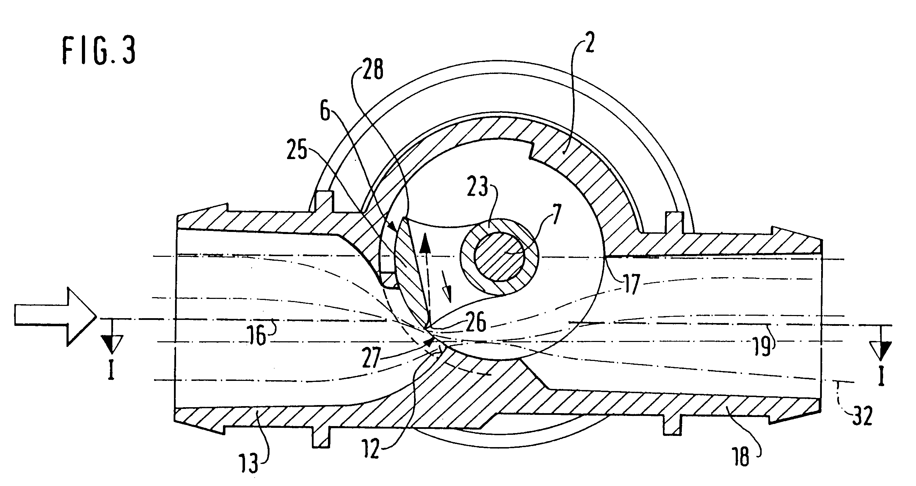

Ein Ausführungsbeispiel der Erfindung ist in der Zeichnung dargestellt und in der nachfolgenden Beschreibung näher erläutert. Figur 1 zeigt einen Längsschnitt durch einen Drehsteller, Figur 2 zeigt eine Ansicht auf den Eingangsstutzen des Drehstellers, Figur 3 zeigt einen Schnitt gemäß Linie III-III in Figur 1 und Figur 4 zeigt einen Drehschieber in perspektivischer Ansicht.

### Beschreibung des Ausführungsbeispiels

Ein Drehsteller 1 zur Regelung der Leerlaufverbrennungsluft einer Brennkraftmaschine hat ein Drehschiebergehäuse 2 mit Gehäusekappe 3, innerhalb derer ein Stellmotor 4 untergebracht ist. Der Stellmotor 4 hat einen Rotor 5, der auf einen als Drosselorgan dienenden Drehschieber 6 wirkt. Der Drehschieber 6 ist über eine Welle 7, die in zwei Wälzlagern 8, 9 gelagert ist, mit dem Rotor 5 verbunden. Der Drehschieber 6 sitzt in einer parallel zur Welle 7 angeordneten Bohrung 11 im Gehäuse 2. Im Bereich des Drehschiebers 6 weist das Gehäuse 2 seitlich eine in die Bohrung 11 mündende Drosselöffnung 12 auf, die mit einem Eingangsstutzen 13 zum Aufstecken einer Bypassleitung 14 verbunden ist. Die Bypassleitung 14 fuhrt zu einem Ansaugrohr 15 mit Drosselklappe für die Regelung der Verbrennungsluftmenge einer Brennkraftmaschine. Der Eingangsstutzen 14 liegt rechtwinklig zur Welle 7 jedoch ist seine Achse 16 so versetzt, daß sie seitlich an der Welle 7 des Drehschiebers 6 vorbeiläuft und diese nicht schneidet. In dem der Drosselöffnung 12 gegenüberliegenden Wandbereich weist die Bohrung 11 eine gegenüber der Drosselöffnung 12 einen weiteren Querschnitt aufweisende Austrittsöffnung 17 auf, die mit einem Ausgangsstutzen 18 verbunden ist. Die Achse 19 des Ausgangsstutzens 18 liegt wie die des Eingangsstutzens 16 senkrecht zur Welle 7, aber seitlich versetzt. Die Achsen 16 und 19 liegen auf einer Linie.

Die Drosselöffnung 12 hat, wie aus Figur 2 ersichtlich ist, eine rechteckige Form. Die längeren Begrenzungskanten 21 der Drosselöffnung 12 liegen unter einem spitzen Winkel schräg zur Achse der Welle 7. Die Drosselöffnung kann aber auch als Parallelogramm ausgebildet sein, sodaß die längeren Begrenzungskanten wiederum schräg zur Achse der Welle 7 und die kürzeren Kanten etwa rechtwinkelig dazu liegen. Der Drehschieber 6 besteht aus einer mit der Welle 7 verbundenen Hülse 23, an der über zwei Arme 24 ein Schließelement 25 befestigt ist. Dieses ist als parallelogrammförmiger Ausschnitt aus einer Zylindermantelfläche ausgebildet. Das Schließelement hat eine vordere Steuerkante 26, die die Drosselöffnung 12 mehr oder weniger überstreicht und damit die Größe des Öffnungsspalts 27 der Drosselöffnung 12 bestimmt. Die scharfkantige Steuerkante 26 verläuft wie die Begrenzungskanten 21 der Drosselöffnung 12 unter einem spitzen Winkel zur Achse der Welle 7. Die der Steuerkante 26 gegenüberliegende rückwärtige Kante 28 des Drehschiebers 6 verläuft in gleicher Weise schräg zur Achse der Welle 7. Die Begrenzungskanten 21 der Drosselöffnung 12 sowie die Steuerkante 26 und die rückwärtige Kante 28 des Drehschiebers 6 sind gegenüber der Achse der Welle 7 zur gleichen Seite geneigt.

In Figur 2 ist der Drehschieber 6 in seiner Ruhelage gezeigt, die er bei stromlosem Stellmotor 4 einnimmt. Zur Regelung der Leerlaufluftmenge kann die Drosselöffnung 12 durch Drehen des Drehschiebers 6 im Uhrzeigersinn vollständig geschlossen werden (Position 30 des Schließelements 25 in strichpunktierter Darstellung). Durch Drehen entgegen des Uhrzeigersinns wird die Drosselöffnung weiter geöffnet (Position 31 des Schließelements in strichgekreuzter Darstellung). Der Öffnungsspalt 27 liegt in jeder Drehlage des Drehschiebers 6 schräg zur Bohrung 11 und zur Achse der Welle 7. Die Schräglage der Drosselöffnungs-Begrenzungskanten 21 und der Kanten 26, 28 des Schließelements 25 wird auf die Dicke der Welle 7 bzw. der Hülse 23 abgestimmt, um Pfeifgeräusche und Luftdrehmomentsprünge auf ein Minimalmaß zu reduzieren. Dabei wirkt insbesondere auch die rückwärtige schräge Kante 28 einer Wirbelausbildung in dem nicht direkt durchstömten Teil der Bohrung 11 entgegen. Die beiden Bauformen der Drosselöffnung 12 haben zusätzlich folgende Wirkungen: die schrägliegende rechteckige Öffnung hat einen leicht vergrößerten Stellwinkel und eine gegenüber dem Stand der Technik unveränderte Leckluft; die parallelogrammförmige Drosselöffnung hat einen unveränderten Stellwinkel, jedoch eine geringfügig erhöhte Leckluft.

Im Betrieb des Drehstellers 1 erhält der Stellmotor 4 von einem Steuergerät der Brennkraftmaschine ein Signal für die Drehstellung des Rotors 5. Entsprechend dieser Drehstellung steht dann das Schließelement 25 in Bezug auf die Drosselöffnung 12. Je nach Größe des sich ausbildenden Öffnungsspalts 27 strömt nun eine mehr oder weniger große Luftmenge durch den Eingangsstutzen 13 in das Drehschiebergehäuse 2 ein. Aus Figur 3 ist an den strichpunktierten Strömungslinien 32 ersichtlich, daß der seitliche Versatz der Achsen 16 und 19 von Eingangs- und Ausgangsstutzen 13 und 18 gegenüber der Welle 7 zu einer je nach Drosselstellung mehr oder weniger eingeschnürten, ansonsten jedoch weitgehend geradlinigen wirbelfreien Durchströmung des Drehstellergehäuses 2 führt. Die Strömung verläuft an der Welle 7 seitlich vorbei zum Ausgangsstutzen 18. Die wirbelfreie Durchströmung wird begünstigt durch die Anordnung der Drosselöffnung 12 am Eingangsstutzen 13 und einer diesem gegenüber im Querschnitt weiteren Austrittsöffnung 17; bei einer Anordnung der Drosselöffnung am Ausgangsstutzen würde diese Wirkung nicht erzielt.

## Patentansprüche

1. Drehsteller zur Steuerung eines Drosselquerschnitts in einer betriebsmittelführenden Leitung einer Brennkraftmaschine mit einem Gehäuse (2, 3) und einem Stellmotor (4), der einen als Drosselorgan wirkenden Drehschieber (6) antreibt, welcher über eine Welle (7) in einer Bohrung (11) des Gehäuses zentrisch angeordnet drehbar ist und eine schräg zur Achse der Welle (7) verlaufende Steuerkante (26) hat, mit der er eine in dem Gehäuse (2) des Drehschiebers angeordnete Drosselöffnung (12) je nach Drehstellung mehr oder weniger verschließt sowie eine der Steuerkante (26) gegenüberliegende rückwärtige Kante (28) hat, die sich bei einer Verdrehung der Steuerkante (26) in Richtung eines Öffnens der Drosselöffnung (12) von der Drosselöffnung (12) wegbewegt und bei einer Verdrehung der Drosselkante (26) in Richtung eines Schließens der Drosselöffnung (12) auf die Drosselöffnung (12) zubewegt, wobei das zu steuernde Fluid durch einen eine Achse (16) senkrecht zur Welle (7) aufweisenden Eingangsstutzen (13) direkt über die Drosselöffnung (12) in die Bohrung (11) des Drehstellers hinein und durch einen Ausgangsstutzen (18) wieder herausgelangt, der eine Achse (19) hat, die senkrecht zur Welle (7) und an dieser vorbeiläuft, ohne sie zu schneiden, dadurch gekennzeichnet, daß die rückwärtige Kante (28) zur gleichen Seite wie die Steuerkante (26) schräg zur Achse der Welle (7) verläuft und die Achse (16) des Eingangsstutzens (13) an der Welle (7) derart vorbeiläuft, daß die Achsen (16) und (19) von Eingangsstutzen (13) und Ausgangsstutzen (18) auf einer Linie liegen, so daß die Strömung etwa tangential an der Welle (7) vorbeigeleitet wird.

2. Drehsteller nach Anspruch 1, dadurch gekennzeichnet, daß die den Kanten (26, 28) des Drehschiebers (6) zugeordneten Begrenzungskanten (21) der Drosselöffnung (12) schräg zur Achse der Welle (7) des Drehschiebers (6) verlaufen.

3. Drehsteller nach einem der Ansprüche 1 oder 2, dadurch gekennzeichnet, daß die Drosselöffnung (12) die Form eines Parallelogramms hat.

4. Drehsteller nach einem der Ansprüche 1 oder 2, dadurch gekennzeichnet, daß die Drosselöffnung (12) die Form eines Rechtecks hat.

5. Drehsteller nach einem der vorhergehenden Ansprüche, dadurch gekennzeichnet, daß der Drehschieber (6) aus seiner Ruhelage heraus, die er bei stromlosem Stellmotor (4) einnimmt, in beiden Drehrichtungen verstellbar ist.

## Claims

1. Rotary actuator for controlling a throttle cross-section in an operating-medium conduit of an internal combustion engine, with a housing (2, 3) and an actuating motor (4) which drives a rotary slide (6) that acts as a throttling member, is arranged in a central and rotatable manner in a bore (11) of the housing by way of a shaft (7) and has a control edge (26) which runs obliquely to the axis of the shaft (7) and by means of which it closes a throttle opening (12) arranged in the housing (2) of the rotary slide to a greater or lesser extent, depending on the rotational position, and has a rear edge (28), situated opposite the control edge (26) which, when the control edge (26) is rotated in the direction of opening of the throttle opening (12), moves away from the throttle opening (12) and, when the throttling edge (26) is rotated in the direction of closure of the throttle opening (12), moves towards the throttle opening (12), the fluid to be controlled passing through an inlet connector (13) having an axis (16) perpendicular to the shaft (7), directly via the throttle opening (12) into the bore (11) of the rotary actuator and back out through an outlet connector (18) which has an axis (19) which runs perpendicular to the shaft (7) and past the latter without intersecting it, characterized in that the rear edge (28) runs obliquely to the axis of the shaft (7) on the same side as the control edge (26) and the axis (16) of the inlet connector (13) runs past the shaft (7) in such a way that the axes (16) and (19) of the inlet connector (13) and the outlet connector (18) lie on one line, with the result that the flow is directed approximately tangentially past the shaft (7).

2. Rotary actuator according to Claim 1, characterized in that the boundary edges (21) of the throttle opening (12) associated with the edges (26, 28) of the rotary slide (6) run obliquely to the axis of the shaft (7) of the rotary slide (6).

3. Rotary actuator according to either of Claims 1 or 2, characterized in that the throttle opening (12) has the shape of a parallelogram.

4. Rotary actuator according to either of Claims 1 or 2, characterized in that the throttle opening (12) has the shape of a rectangle.

5. Rotary actuator according to one of the preceding claims, characterized in that the rotary slide (6) can be adjusted in both directions of rotation out of its rest position, which it adopts when the actuating motor (4) is deenergized.

## Revendications

1. Régulateur rotatif pour la commande d'une section transversale d'étranglement sur une canalisation amenant à un moteur à combustion interne de l'air de combustion pour le ralenti, avec un boîtier (2, 3) et un moteur de réglage (4) qui entraîne un tiroir rotatif (6) intervenant en tant qu'organe d'étranglement, et qui, centré dans un alésage (11) du boîtier, est susceptible de tourner par l'intermédiaire d'un arbre (7) et comporte une arête de commande (26) s'étendant obliquement par rapport à l'axe de l'arbre (7), arête par laquelle il ferme plus ou moins selon, sa position de rotation, une ouverture d'étranglement (12) disposée dans le boîtier (2) de ce tiroir rotatif, lequel comporte également une arête arrière (28) placée en face de l'arête de commande (26) et qui, lors d'une rotation de l'arête de commande (26) dans le sens d'un élargissement de l'ouverture d'étranglement (12) s'éloigne de cette ouverture tandis que, lors d'une rotation de l'arête de commande (26) dans le sens d'une fermeture de l'ouverture d'étranglement (12), elle se déplace vers et sur cette ouverture d'étranglement (12), tandis que le fluide à contrôler arrive par une tubulure d'entrée (13) dont l'axe (16) est perpendiculaire à l'arbre (7) directement par l'ouverture d'étranglement (12) dans l'alésage (11) du régulateur rotatif, et en ressort par une tubulure de sortie (18) dont l'axe (19) est perpendiculaire à l'arbre (7) et passe à côté de celui-ci sans le couper, régulateur rotatif caractérisé en ce que l'arête arrière (28) s'étend obliquement par rapport à l'axe de l'arbre (7) vers le même côté que l'arête de commande (26), et l'axe (16) de la tubulure d'entrée (13) passe à côté de l'arbre (7) de façon que les axes (16) et (19) de la tubulure d'entrée (13) et de la tubulure de sortie (18) soient alignés, si bien que l'écoulement passe à peu près tangentiellement à l'arbre (7).

2. Régulateur rotatif selon la revendication 1, caractérisé en ce que les arêtes (21) de délimitation de l'ouverture d'étranglement (12), associées aux arêtes (26, 28) du tiroir rotatif (6), s'étendent obliquement par rapport à l'axe de l'arbre (7) du tiroir rotatif (6).

3. Régulateur rotatif selon l'une des revendications 1 ou 2, caractérisé en ce que l'ouverture d'étranglement (12) a la forme d'un parallélogramme.

4. Régulateur rotatif selon l'une des revendications 1 ou 2, caractérisé en ce que l'ouverture d'étranglement (12) a la forme d'un rectangle.

5. Régulateur rotatif selon l'une des précédentes revendications, caractérisé en ce que le tiroir rotatif (6) est susceptible d'être déplacé dans les deux sens de rotation à partir de sa position de repos qu'il occupe lorsque le moteur de réglage (4) n'est pas alimenté en courant.
